# EUROPÄISCHE PATENTSCHRIFT

(11) **EP 4 392 273 B1**
(45) Veröffentlichungstag und Bekanntmachung des Hinweises auf die Patenterteilung: **25.06.2025**
(21) Anmeldenummer: 22785918.8
(22) Anmeldetag: 26.08.2022
(51) Int. Cl.: B60F 3/00

(54) **RAD FÜR AMPHIBIENFAHRZEUGE**
WHEEL FOR AMPHIBIOUS VEHICLES
ROUE POUR VÉHICULES AMPHIBIES

(30) Priorität: 26.08.2021 DE 102021122163
(43) Veröffentlichungstag der Anmeldung: 03.07.2024
(73) Patentinhaber: Rieger, Bernhard, 73760 Ostfildern (DE)
(72) Erfinder: Rieger, Bernhard, 73760 Ostfildern (DE)
(74) Vertreter: Limbeck, Achim
(86) Internationale Anmeldenummer: PCT/DE2022/100637
(87) Internationale Veröffentlichungsnummer: WO 2023/025355

(56) Entgegenhaltungen:
- DE-A1- 2 856 157
- KR-A- 20140 008 206

## Beschreibung

### Technisches Gebiet

Die vorliegende Erfindung betrifft ein Rad für Amphibienfahrzeuge (ein- oder mehrrädrige Amphibienfahrräder, -roller, -motorräder, etc.) gemäß dem Oberbegriff des Patentanspruchs 1.

### Stand der Technik

Aus dem Stand der Technik sind bereits Räder für Amphibienfahrzeuge bekannt, die aus einer Felge sowie einer Reifenaufstandsfläche zum Befahren eines festen Untergrunds gebildet sind, wobei bspw. aus der DE 28 56 157 A1 an einem Rad ein zur Aufnahme von Luft und/oder Gas ausgebildeter Schwimmkörper vorgesehen ist, der bei Bedarf aus einer Neutralstellung in eine Schwimmstellung bringbar ist. Hierbei wird ein luftdichter Schwimmkörper verwendet, der bei abgelassenem Gas zusammengefaltet und in Gas befülltem Zustand in eine rollfähige Form gebracht wird. Diese Schwimmkörper sind mit festen Haltern an Vorder- und Hinterrad des Amphibienfahrzeuges befestigt.

Der größte Nachteil eines derartigen Rades bzw. Amphibienfahrzeuges dürfte darin zu sehen sein, dass dieses durch die konstruktionsbedingte Überbreite des Fahrzeuges in der Praxis kaum nutzbar sein dürfte. So dürfte es sich bereits als erschwert erweisen, ein Fahrrad mit derartige Dimensionen zu transportieren. Aber auch die Fahreigenschaften an Land dürften konstruktionsbedingt stark beeinträchtigt sein.

Aus der KR 2014 0008206 A ist ein Fahrrad zum Spielen im Wasser bekannt, das ein Rad umfasst, das eine Felge sowie eine Reifenaufstandsfläche zum Befahren eines festen Untergrunds aufweist, wobei an dem Rad ein zur Aufnahme von Luft und/oder Gas ausgebildeter Schwimmkörper vorgesehen ist, der bei Bedarf aus einer Neutralstellung in eine Schwimmstellung bringbar ist. Die KR 2014 0008206 A offenbart ein Rad entsprechend dem Oberbegriff des Anspruchs 1.

Aus der DE 28 56 157 A1 ist ein Amphibien-Fahrrad bekannt, das eine Wasserfahrt-Schwimmereinrichtung umfasst, die aus Schwimmern besteht, von denen jeder einen luftdichten Sack aufweist, der bei abgelassenem Gas kleiner zusammengefaltet und in gasgefülltem Zustand in eine rollfähige Form gebracht werden kann, sowie aus Halterahmen, von denen jeder - unter Aufnahme eines mit Gas gefüllten, luftdichten Sacks - frei drehbar auf den Enden der Vorder- und Hinterachse angeordnet werden kann um das Fahrrad zu tragen.

### Darstellung der Erfindung

Der vorliegenden Erfindung liegt die Aufgabe zugrunde, die vorgenannten Nachteile zu beseitigen und ein Rad für ein Amphibienfahrzeug zu schaffen, welches einerseits eine jedenfalls nahezu nahtlose Nutzung von der Landfahrt auf das Wasser und umgekehrt ermöglicht und andererseits bei der Landfahrt ohne Beeinträchtigungen genutzt werden kann.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen des erfindungsgemäßen Rades für ein Amphibienfahrzeug sind in den abhängigen Unteransprüchen angegeben.

### Kurzbeschreibung der Zeichnungen

Weitere Ziele, Merkmale, Vorteile und Anwendungsmöglichkeiten des erfindungsgemäßen Rades für ein Amphibienfahrzeug ergeben sich aus der nachfolgenden Beschreibung eines Ausführungsbeispiels anhand der Zeichnungen.

In den Zeichnungen zeigen
Fig. 1 das erfindungsgemäße Rad für ein Amphibienfahrzeug in einer vorteilhaften Ausführungsform im Querschnitt, wobei die schwenkbaren Profile eingeschwenkt sind (anliegen);
Fig. 2 das erfindungsgemäße Rad für ein Amphibienfahrzeug wie in Fig. 1 im Querschnitt, wobei die schwenkbaren Profile zur Bildung des schwimmfähigen Hohlraums mittels des wasserdichten sowie flexiblen und/oder elastischen Materials ausgeklappt sind;

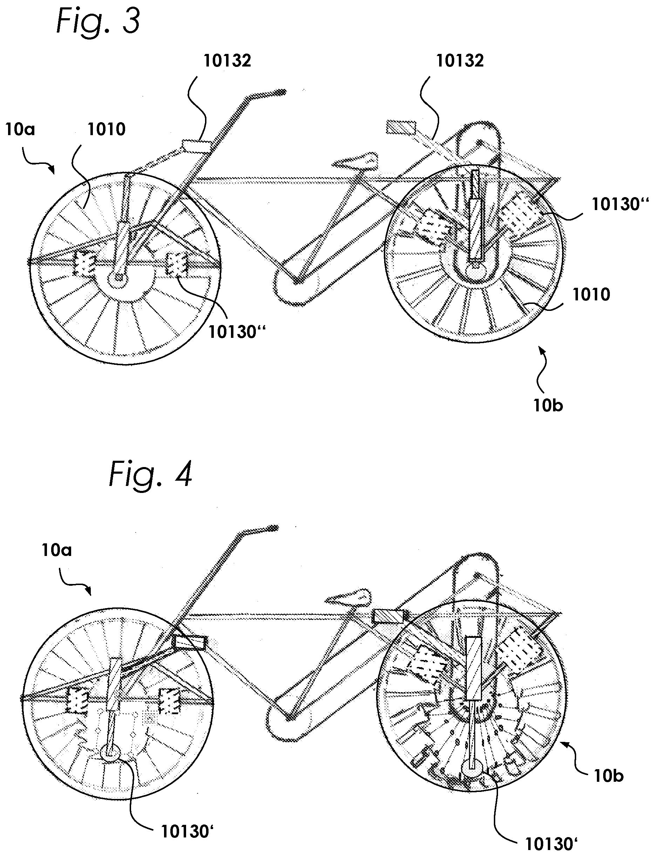

Fig. 3 zwei erfindungsgemäße Räder an einem Amphibienfahrzeug mit eingeschwenkten Profilen in der Seitenansicht;
Fig. 4 zwei erfindungsgemäße Räder an einem Amphibienfahrzeug mit ausgeschwenkten Profilen in der Seitenansicht;
Fig. 5 ein weiteres Ausführungsbeispiel der vorliegenden Erfindung, bei dem in dem Felgenteil vorzugsweise am Anfang des Schutzbleches ein Mechanismus ausgelöst wird, der per Biegescharniertechnik die Spreizung auslöst und mittels eines Schnappmechanismus wieder entriegelt;

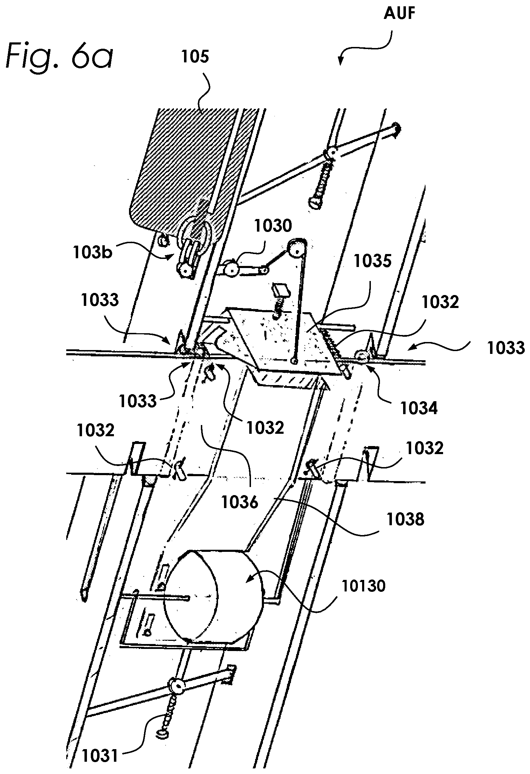

Fig. 6a das Ausführungsbeispiel aus Fig. 5 in einer vergrößerten Ansicht in einer Position Zoom AUF, die die Spreizung auslöst;

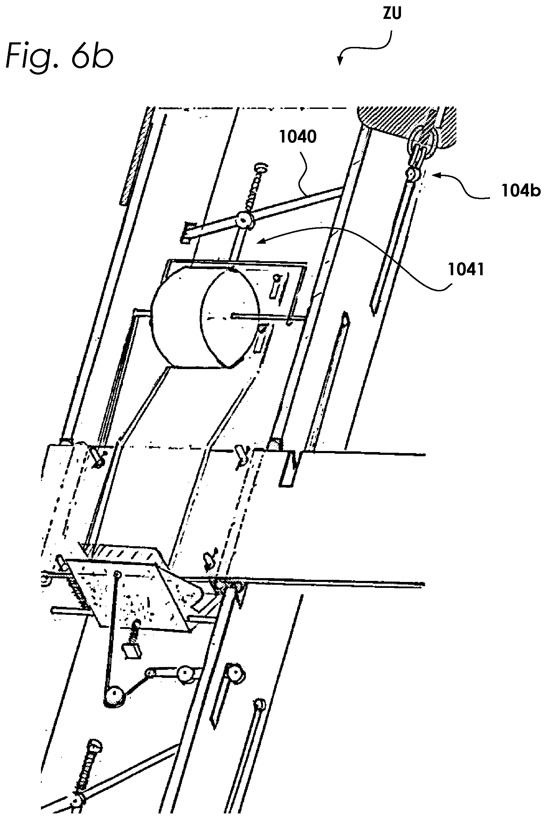

Fig. 6b das Ausführungsbeispiel aus Fig. 5 in einer vergrößerten Ansicht in einer Position Zoom ZU, die die Spreizung wieder entriegelt.

### Ausführung der Erfindung

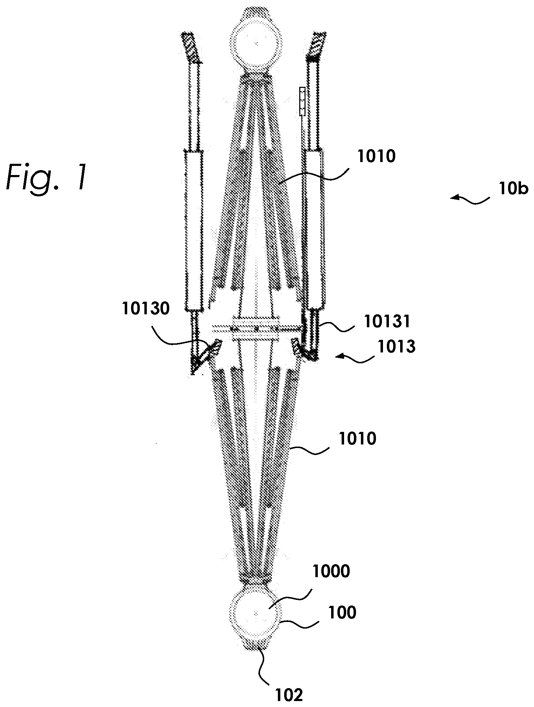

Wie aus Fig. 1 ersichtlich, weist das erfindungsgemäße Rad 10a, 10b für Amphibienfahrzeuge 1 eine Felge 100 sowie eine Reifenaufstandsfläche 102 zum Befahren eines festen Untergrunds auf, wobei an dem Rad 10a, 10b mindestens ein zur Aufnahme von Luft und/oder Gas ausgebildeter Schwimmkörper 101 vorgesehen ist, der bei Bedarf aus einer Neutralstellung in eine Schwimmstellung bringbar ist.

Gekennzeichnet ist die vorliegende Erfindung dadurch, dass der Schwimmkörper 101 aus zahlreichen am Umfang der Felge 100 und/oder am Umfang eines innerhalb des Innenumfangs der Felge 100 verlaufenden Aufnahmemittels 1000 in einem definierten Winkel W zur Radebene E schwenkbaren Profilen 1010 gebildet ist, wobei an den Profilen 1010 zur Bildung eines schwimmfähigen Hohlraums 1011 mindestens ein wasserdichtes sowie flexibles und/oder elastisches Material 1012 angeordnet und/oder mit den Profilen 1010 verbunden ist.

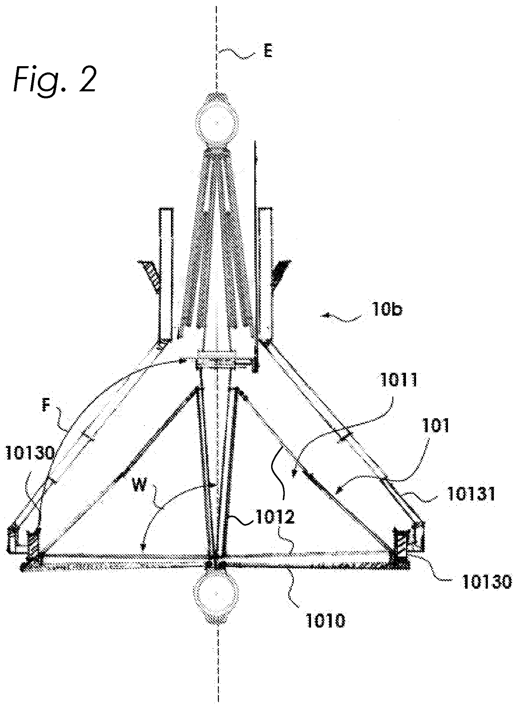

Wie aus Fig. 2 ersichtlich, wird mit dem Aufschwenken der Profile 1010 das Material 1012 zur Bildung des Hohlraums 1011 aufgespannt.

Es ist dabei nicht zwingend notwendig, dass zur Bildung des Hohlraums 1011 die Profile 1010 selbst wasserdicht miteinander verbunden sind, sondern dass durch die mit dem Profilen 1010 verbundenen Material 1012 oder den Materialien 1012 ein wasserdichter Hohlraum geschaffen wird. In einer weiteren Ausführungsform der Erfindung können aber auch die Profile 1010 selbst wasserdicht miteinander verbunden sein.

In einer vorteilhaften Ausführungsform der Erfindung sind sämtliche an einem Rad 10a, 10b vorgesehenen Profile 1010 zur Bildung eines an dem Rad 10a, 10b umlaufenden, schwimmfähigen Hohlraums 1011 an dem Schwimmkörper 101 mittels mindestens einem wasserdichten und flexiblen und/oder elastischen Material 1012 wasserdicht miteinander verbunden.

Das Material 1012 kann weiterhin an mindestens einem weiteren Bereich des Rades 10a, 10b mit dem Rad 10a, 10b zur Bildung eines umlaufenden, schwimmfähigen Hohlraums 1011 an dem Schwimmkörper 101 verbunden sein.

In einer weiteren besonders vorteilhaften Ausführungsform der Erfindung sind die Profile 1010 zumindest bereichsweise überlappend angeordnet und/oder ausgebildet, wobei die Profile 1010 in einer weiteren Ausführungsform zudem als Lamellen und/oder Schaufeln und/oder als längliche Profilkörper ausgebildet sein können. Die Ausbildung der Profile 1010 als Schaufeln erlaubt es, das Rad 10, 10b gleichzeitig als Schwimm- und als Antriebsmittel zu nutzen.

Wie aus den Fign. ersichtlich, ist vorzugsweise mindestens eine Einrichtung 1013 vorgesehen, mittels der die Profile 1010 aus ihrer Neutralstellung in eine in einem definierten Winkel W zur Radebene E vorgesehene Schwimmstellung und umgekehrt schwenkbar sind.

In einer ganz besonders vorteilhaften Ausführungsform der Erfindung ist dabei die Einrichtung 1013 aus mindestens einem rollen-, kugel- oder radförmigen Druckmittel 10130 gebildet, welches am Innenumfang der Profile 1010 anliegt und mittels dem die Profile 1010 mittels Druck aus ihrer Neutralstellung in eine in einem definierten Winkel W zur Radebene E vorgesehene Schwimmstellung und umgekehrt schwenkbar sind.

Derartige Druckmittel 10130 können bspw. am äußeren Rand der Profile 1010 in einem (vorzugsweise profilfreien) Bereich angebracht werden. Im vorliegenden Ausführungsbeispiel wird das Rad 10a, 10b z.B. mit Profilen 1010 versehen, die sich nach durchqueren der Fahrradgabel bzw. -Aufhängung z.B. scharniermäßig öffnen, aufgrund des Drucks eines einen Abwärtsdruck erzeugenden, rollen-, kugel- oder radförmigen Druckmittels 10130, welches in der Innenseite der Profile 1010 (möglichst am Rande) gedrückt wird. Damit sich diese wieder um die Fahrradgabel (bzw. - Aufhängung) wieder zu passieren zusammenziehen/einklappen, kann ein zweites Druckmittel 10130 zum Eindrücken angeordnet sind. Ein letztes Druckmittel 10130 kann vorgesehen sein, damit der Druck des einen Abwärtsdruck erzeugenden Druckmittels 10130 nicht zu groß ist und sich die Profile 1010 nicht zu früh öffnen (um geringsten Reibewiederstand zu haben wird das entsprechende Material eingebaut mit geringem Reibungswiederstand).

Die rollen-, kugel- oder radförmigen Druckmittel 10130 sind vorzugsweise an einem schwenkbaren Hebelarm 10131 angeordnet, mittels dem die Druckmittel 10130 entlang der Führungsbahn F der schwenkbaren Profile 1010 betätigbar sind.

Theoretisch könnten auch andere Methoden wie die Luftkammermethodik, wie z.B. eine Doppel-Fächer-Scharnierreihe mit bspw. zwei nach-unten-Druckrollen befestigt werden, bei der die äußere Fächer-Scharnierreihe Stabilisierung und Antrieb mit den Hohlkehlleisten beinhalten, sowie eine innere Fächer-Scharnierleiste, die das Absinken verhindert (also für den Auftrieb sorgt). Dies ist aber hier durch die Luftkammermethodik überflüssig. Die bisher vorliegende Beschreibung nutzt die Methodik über eine luftdichte ausklappbare (Gummi-) Kammer.

Der Hebelarm 10131 ist vorzugsweise hydraulisch und/oder teleskopisch ausgebildet.

Die Einrichtung 1013 kann elektrische, mechanische, hydraulische, chemische und/oder magnetische Mittel umfassen, mittels der die Profile 1010 aus ihrer Neutralstellung in eine in einem definierten Winkel W zur Radebene E vorgesehene Schwimmstellung und umgekehrt schwenkbar sind.

Die Schwimmkörper 101 umfassen vorzugsweise Luft-/Gasein- und/oder Luft-/Gasauslässe sowie Mittel zur Befüllung des schwimmfähigen Hohlraums 1011, mittels derer der schwimmfähige Hohlraum 1011 mit Luft und/oder Gas befüllbar ist.

Das Volumen der Schwimmkörper 101 oder der schwimmfähigen Hohlräume 1011 an dem Rad 10a, 10b ist vorzugsweise jeweils variabel einstellbar.

Darüber hinaus kann eine Steuerung vorgesehen sein, mittels der der Schwenkvorgang einleitbar und/oder das Volumen der Schwimmkörper 101 oder der schwimmfähigen Hohlräume 1011 an dem Rad 10a, 10b jeweils variabel einstellbar ist.

Während das Vorderrad 10a eines Amphibienfahrzeuges regelmäßig nur eine Auftriebsfunktion besitzt (+ggf. Lenkfunktion) kann das Hinterrad 10b vorwiegend zum Antrieb- und zur Stabilisierung genutzt / überdehnt werden.

Die Räder 10a, 10b eines Amphibienfahrzeuges mit mindestens zwei Rädern 10a, 10b werden vorzugsweise so konzipiert, dass ein Auftrieb für eine Person gewährleistet wird (ggf. müsste eine größere Rad-Größe gewählt werden um schweren Personen genügend Auftrieb und Stabilisierung zu gewährleisten). Das Rad 10a, 10b wird daher um das notwendige Volumen zu haben, größtmöglich aber nicht unnötig groß konzipiert.

Der Speichenbereich des Rades 10a, 10b kann vorzugsweise als ein Not-Volumen konzipiert sein, das ausreicht, um bei nicht-Treten etwaiger Pedale nicht ganz zu versinken.

Beim hinteren Rad 10b, welches stabilisierend und antreibend wirken kann, werden zu den vorteilhafterweise Aluschienen verarbeitet, die als ein vorzugsweise halbhohles Profil ausgestaltet sind und einen Wasserrad-Antriebs-Effekt erzeugen, also das hintere Rad 10b antreiben.

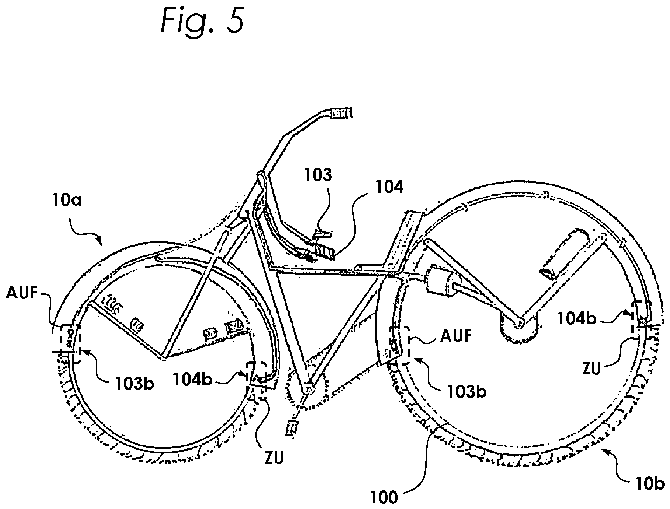

Fig. 5 ein weiteres Ausführungsbeispiel der vorliegenden Erfindung, bei dem in einer/m Felgen(-)teil 100 vorzugsweise am Anfang des Schutzbleches 105 ein Mechanismus ausgelöst wird, der per Biegescharniertechnik die Spreizung auslöst und mittels eines Schnappmechanismus wieder entriegelt.

In dieser Modifikation/Versionsverbesserung werden die Profile 1010 (Lamellen und/oder Schaufeln) zum Öffnung und Schließung vorzugsweise aus einem Mechanismus innerhalb der Felge 100 aktiviert, der durch einen Seilzug, eine Hydraulik oder auf sonstige Weise mittels mindestens eines AUF-Schalters 103 ausgelöst.

Der AUF-Schalter 103 (vorzugsweise ein Schalthebel oder sonstiges mechanisches und/oder elektrisches Schaltelement), der vorteilhafterweise am oder im Bereich des Lenkrads befestigt sein kann, aktiviert eine AUF-Druck-Rolle 103b, die vorzugsweise am (massiveren jeweils) vorderen Schutzblech befestigt ist und sich in Richtung der Felge drückt (wie ein Bremshebel) und damit den Weg zur Felge so verengt, dass der AUF-Arretierungs-Lös-Hebel 1030 nach unten gedrückt wird und somit die Arretierung gelöst wird (gleichzeitig der Kopf des Auf-Arretierungs-Lös-Hebels 1030 wie hier im Schlitz verschwindet, damit die Auf-Druck-Rolle 103b weiterlaufen kann. Die somit unter Dauer-Druck entlöste Arretierwippe 1035 gibt dann den Weg frei, dem Druck der Druckfedern 1032 ausgesetzt zu sein und so schnellt die Profil-Scharnierkombination 1036 nach oben (seitlich begrenzt und geleitet durch die Gleit-Rollen 1033 und ermöglicht durch die Spreizung der Scharniere 1034) und bildet eine durchgängige Lamellenebene. Dieser Vorgang wurde neben der entlösten ArretierWippe auch ermöglicht durch das, dann durch die Eindrück-Rollen-Rückholfeder 1031 zurückgezogene 10130 Druckmittel (z.B. Rolle).

Schließmechanismus: Ein ZU-Schalter 104 (vorzugsweise ein Schalthebel oder sonstiges mechanisches und/oder elektrisches Schaltelement), der ebenfalls vorzugsweise am Lenkrad befestigt sein kann, aktiviert eine ZU-Druck-Rolle 104b, die am (massiveren) hinteren Schutzblech befestigt, sich in Richtung der Felge 100 drückt (wie ein Bremshebel - hydraulisch per Seilzug oder sonst wie) und damit den Weg zur Felge so verengt, dass der Zu-Drück-Hebel 1040 nach unten gedrückt wird und im Schlitz verschwindet, damit die Auf-Druck-Rolle 104b weiterlaufen kann. Dabei wird das Druckmittel 10130 durch den Eindrück-Rollen-Schlitten 1041 auf die Profilplattform 1038 geschoben wobei die Profil-Scharnierkombination 1036 wieder nach unten gedrückt wird (und dabei die Lamellen sich gleichzeitig wieder schließen) bis die Arretierwippe 1035 wieder einrastet.

### Liste der Bezugsziffern

- 10a: (Vorder-)Rad
- 10b: (Hinter-)Rad
- 100: Felge
- 101: Schwimmkörper
- 102: Reifenaufstandsfläche
- 103: AUF-Schalter
- 104: ZU-Schalter
- 103b: AUF-Druck-Rolle
- 104b: ZU-Druck-Rolle
- 1000: Aufnahmemittel
- 1010: Profile
- 1011: Hohlraum
- 1012: Material
- 1013: Einrichtung
- 1030: AUF-Arretierungs-Lös-Hebel
- 1031: Eindrück-Rollen-Rückholfeder
- 1032: Dauer-Druck-Stark-Federn (einstellbar) und Arretierstift
- 1033: Gleit-Rollen
- 1034: Scharniere
- 1035: Arretierwippe
- 1036: Profil-Scharnierkombination
- 1038: Profil-Plattform
- 1040: Zu-Drück-Hebel
- 1041: Eindrück-Rollen-Schlitten
- 10130: Druckmittel
- 10130': Druckmittel zum Aufschwenken/Öffnen der Profile
- 10130": Druckmittel zum Einschwenken/Schließen der Profile
- 10131: Hebelarm
- 10132: Bedienteil für Hebelarm
- E: Radebene
- F: Führungsbahn
- W: Winkel

## Patentansprüche

1. Rad (10a, 10b) für Amphibienfahrzeuge (1), welches eine Felge (100) sowie eine Reifenaufstandsfläche (102) zum Befahren eines festen Untergrunds aufweist, wobei an dem Rad (10a, 10b) mindestens ein zur Aufnahme von Luft und/oder Gas ausgebildeter Schwimmkörper (101) vorgesehen ist, der bei Bedarf aus einer Neutralstellung in eine Schwimmstellung bringbar ist,
**dadurch gekennzeichnet, dass**
der Schwimmkörper (101) aus zahlreichen am Umfang der Felge (100) und/oder am Umfang eines innerhalb des Innenumfangs der Felge (100) verlaufenden Aufnahmemittels (1000) in einem definierten Winkel (W) zur Radebene (E) schwenkbaren Profilen (1010) gebildet ist, wobei an den Profilen (1010) zur Bildung eines schwimmfähigen Hohlraums (1011) mindestens ein wasserdichtes sowie flexibles und/oder elastisches Material (1012) angeordnet und/oder mit den Profilen (1010) verbunden ist.

2. Rad (10a, 10b) nach Anspruch 1,
**dadurch gekennzeichnet, dass**
die Profile (1010) zumindest bereichsweise überlappend angeordnet und/oder ausgebildet sind.

3. Rad (10a, 10b) nach Anspruch 1 oder 2,
**dadurch gekennzeichnet, dass**
mindestens eine Einrichtung (1013) vorgesehen ist, mittels der die Profile (1010) aus ihrer Neutralstellung in eine in einem definierten Winkel (W) zur Radebene (E) vorgesehene Schwimmstellung und umgekehrt schwenkbar sind.

4. Rad (10a, 10b) nach Anspruch 3,
**dadurch gekennzeichnet, dass**
die Einrichtung (1013) aus mindestens einem rollen-, kugel- oder radförmigen Druckmittel (10130) gebildet ist, welches am Innenumfang der Profile (1010) anliegt und mittels dem die Profile (1010) mittels Druck aus ihrer Neutralstellung in eine in einem definierten Winkel (W) zur Radebene (E) vorgesehene Schwimmstellung und umgekehrt schwenkbar sind.

5. Rad (10a, 10b) nach Anspruch 4,
**dadurch gekennzeichnet, dass**
die rollen-, kugel- oder radförmigen Druckmittel (10130) an einem schwenkbaren Hebelarm (10131) angeordnet sind, mittels dem die Druckmittel (10130) entlang der Führungsbahn (F) der schwenkbaren Profile (1010) betätigbar sind.

6. Rad (10a, 10b) nach Anspruch 5,
**dadurch gekennzeichnet, dass**
der Hebelarm (10131) hydraulisch und/oder teleskopisch ausgebildet ist.

7. Rad (10a, 10b) nach Anspruch 3,
**dadurch gekennzeichnet, dass**
die Einrichtung (1013) elektrische, mechanische, hydraulische, chemische und/oder magnetische Mittel umfasst, mittels der die Profile (1010) aus ihrer Neutralstellung in eine in einem definierten Winkel (W) zur Radebene (E) vorgesehene Schwimmstellung und umgekehrt schwenkbar sind.

8. Rad (10a, 10b) nach einem der vorangegangenen Ansprüche,
**dadurch gekennzeichnet, dass**
die Schwimmkörper (101) Luft-/Gasein- und/oder Luft-/Gasauslässe sowie Mittel zur Befüllung des schwimmfähigen Hohlraums (1011) umfassen, mittels derer der schwimmfähige Hohlraum (1011) mit Luft und/oder Gas befüllbar ist.

9. Rad (10a, 10b) nach einem der vorangegangenen Ansprüche,
**dadurch gekennzeichnet, dass**
sämtliche an einem Rad (10a, 10b) vorgesehenen Profile (1010) zur Bildung eines an dem Rad (10a, 10b) umlaufenden, schwimmfähigen Hohlraums (1011) an dem Schwimmkörper (101) mittels mindestens einem wasserdichten und flexiblen und/oder elastischen Material (1012) wasserdicht miteinander verbunden sind.

10. Rad (10a, 10b) nach einem der vorangegangenen Ansprüche,
**dadurch gekennzeichnet, dass**
das Material (1012) an mindestens einem weiteren Bereich des Rades (10a, 10b) mit dem Rad (10a, 10b) zur Bildung eines umlaufenden, schwimmfähigen Hohlraums (1011) an dem Schwimmkörper (101) verbunden ist.

11. Rad (10a, 10b) nach einem der vorangegangenen Ansprüche,
**dadurch gekennzeichnet, dass**
das Volumen der Schwimmkörper (101) oder der schwimmfähigen Hohlräume (1011) an dem Rad (10a, 10b) jeweils variabel einstellbar ist.

12. Rad (10a, 10b) nach einem der vorangegangenen Ansprüche,
**dadurch gekennzeichnet, dass**
eine Steuerung vorgesehen ist, mittels der der Schwenkvorgang einleitbar und/oder das Volumen der Schwimmkörper (101) oder der schwimmfähigen Hohlräume (1011) an dem Rad (10a, 10b) jeweils variabel einstellbar ist.

13. Rad (10a, 10b) nach einem der vorangegangenen Ansprüche,
**dadurch gekennzeichnet, dass**
die Profile (1010) als Schaufeln ausgebildet sind, wobei sich die Profile (1010) zur Erzeugung einer Vortriebskraft zusammenziehen/einklappen und nach Durchqueren der Fahrradgabel scharniermäßig öffnen.

14. Rad (10a, 10b) nach einem der vorangegangenen Ansprüche,
**dadurch gekennzeichnet, dass**
die Profile (1010) zum Öffnung und Schließung aus einem Mechanismus innerhalb der Felge (100) aktiviert werden, der durch einen Seilzug, eine Hydraulik oder auf sonstige Weise mittels mindestens eines AUF-Schalters 104b ausgelöst wird.

## Claims

1. Wheel (10a, 10b) for amphibious vehicles (1), which has a rim (100) and a tyre contact surface (102) for driving on a solid surface, at least one floating body (101) being provided on the wheel (10a, 10b), which floating body is designed to receive air and/or gas and can be brought from a neutral position into a floating position as required,
**characterised in that**
the floating body (101) is formed from numerous profiles (1010) pivotable at a defined angle (W) to the wheel plane (E) on the circumference of the rim (100) and/or on the circumference of a receiving means (1000) extending within the inner circumference of the rim (100), at least one watertight and flexible and/or elastic material (1012) being arranged on the profiles (1010) and/or connected to the profiles (1010) to form a buoyant cavity (1011).

2. Wheel (10a, 10b) according to claim 1,
**characterised in that**
the profiles (1010) are arranged and/or formed to overlap at least in certain areas.

3. Wheel (10a, 10b) according to claim 1 or 2,
**characterised in that**
at least one device (1013) is provided by means of which the profiles (1010) can be pivoted from their neutral position into a floating position provided at a defined angle (W) to the wheel plane (E) and vice versa.

4. Wheel (10a, 10b) according to claim 3,
**characterised in that**
the device (1013) is formed from at least one roller-, ball- or wheel-shaped pressure means (10130) which bears against the inner circumference of the profiles (1010) and by means of which the profiles (1010) can be pivoted by means of pressure from their neutral position into a floating position provided at a defined angle (W) to the wheel plane (E) and vice versa.

5. Wheel (10a, 10b) according to claim 4,
**characterised in that**
the roller-, ball- or wheel-shaped pressure means (10130) are arranged on a pivotable lever arm (10131), by means of which the pressure means (10130) can be actuated along the guide path (F) of the pivotable profiles (1010).

6. Wheel (10a, 10b) according to claim 5,
**characterised in that**
the lever arm (10131) is hydraulic and/or telescopic.

7. Wheel (10a, 10b) according to claim 3,
**characterised in that**
the device (1013) comprises electrical, mechanical, hydraulic, chemical and/or magnetic means by means of which the profiles (1010) can be pivoted from their neutral position into a floating position provided at a defined angle (W) to the wheel plane (E) and vice versa.

8. Wheel (10a, 10b) according to one of the preceding claims,
**characterised in that**
the floating bodies (101) comprise air/gas inlets and/or air/gas outlets and means for filling the floatable cavity (1011), by means of which the floatable cavity (1011) can be filled with air and/or gas.

9. Wheel (10a, 10b) according to one of the preceding claims,
**characterised in that**
all profiles (1010) provided on a wheel (10a, 10b) for forming a buoyant cavity (1011) running around the wheel (10a, 10b) are connected to one another in a watertight manner on the floating body (101) by means of at least one watertight and flexible and/or elastic material (1012).

10. Wheel (10a, 10b) according to one of the preceding claims,
**characterised in that**
the material (1012) is connected to the wheel (10a, 10b) in at least one further region of the wheel (10a, 10b) to form a surrounding, buoyant cavity (1011) on the floating body (101).

11. Wheel (10a, 10b) according to one of the preceding claims,
**characterised in that**
the volume of the floats (101) or the buoyant cavities (1011) on the wheel (10a, 10b) can be variably adjusted in each case.

12. Wheel (10a, 10b) according to one of the preceding claims,
**characterised in that**
a control system is provided by means of which the pivoting process can be initiated and/or the volume of the floating bodies (101) or the floatable cavities (1011) on the wheel (10a, 10b) can be variably adjusted in each case.

13. Wheel (10a, 10b) according to one of the preceding claims,
**characterised in that**
the profiles (1010) are designed as blades, wherein the profiles (1010) contract/fold in to generate a propulsive force and open like a hinge after passing through the bicycle fork.

14. Wheel (10a, 10b) according to one of the preceding claims,
**characterised in that**
the profiles (1010) are activated for opening and closing from a mechanism within the rim (100), which is triggered by a cable pull, a hydraulic system or in another manner by means of at least one OPEN switch 104b.

## Revendications

1. Roue (10a, 10b) pour véhicules amphibies (1), qui présente une jante (100) ainsi qu'une surface de contact du pneu (102) pour rouler sur un sol ferme, au moins un corps flottant (101) conçu pour recevoir de l'air et/ou du gaz étant prévu sur la roue (10a, 10b), lequel peut être amené en cas de besoin d'une position neutre dans une position flottante,
**caractérisée en ce que**
le corps flottant (101) est conçu pour recevoir de l'air et/ou du gaz, que le corps flottant (101) est formé de nombreux profilés (1010) pouvant pivoter sur la périphérie de la jante (100) et/ou sur la périphérie d'un moyen de réception (1000) s'étendant à l'intérieur de la périphérie intérieure de la jante (100) selon un angle défini (W) par rapport au plan de roue (E), au moins un matériau (1012) étanche à l'eau ainsi que flexible et/ou élastique étant disposé sur les profilés (1010) et/ou relié aux profilés (1010) pour former un espace creux (1011) pouvant flotter.

2. Roue (10a, 10b) selon la revendication 1,
**caractérisée en ce que**
les profilés (1010) sont disposés et/ou formés de manière à se chevaucher au moins par zones.

3. Roue (10a, 10b) selon la revendication 1 ou 2,
**caractérisée en ce que**
est prévu au moins un dispositif (1013) au moyen duquel les profilés (1010) peuvent être pivotés de leur position neutre dans une position flottante prévue selon un angle défini (W) par rapport au plan de la roue (E) et inversement.

4. Roue (10a, 10b) selon la revendication 3,
**caractérisée en ce que**
le dispositif (1013) est formé d'au moins un moyen de pression (10130) en forme de rouleau, de bille ou de roue, qui s'applique sur la périphérie intérieure des profilés (1010) et au moyen duquel les profilés (1010) peuvent être pivotés au moyen d'une pression de leur position neutre dans une position flottante prévue selon un angle défini (W) par rapport au plan de la roue (E) et inversement.

5. Roue (10a, 10b) selon la revendication 4,
**caractérisée en ce que**
les moyens de pression (10130) en forme de rouleau, de bille ou de roue sont disposés sur un bras de levier pivotant (10131), au moyen duquel les moyens de pression (10130) peuvent être actionnés le long de la voie de guidage (F) des profilés pivotants (1010).

6. Roue (10a, 10b) selon la revendication 5,
**caractérisée en ce que**
le bras de levier (10131) est hydraulique et/ou télescopique.

7. Roue (10a, 10b) selon la revendication 3,
**caractérisée en ce que**
le dispositif (1013) comprend des moyens électriques, mécaniques, hydrauliques, chimiques et/ou magnétiques à l'aide desquels les profilés (1010) peuvent être pivotés de leur position neutre dans une position flottante prévue selon un angle défini (W) par rapport au plan de la roue (E) et inversement.

8. Roue (10a, 10b) selon l'une quelconque des revendications précédentes,
**caractérisée en ce que**
les corps flottants (101) comprennent des entrées d'air/gaz et/ou des sorties d'air/gaz ainsi que des moyens de remplissage de la cavité flottante (1011) permettant de remplir la cavité flottante (1011) d'air et/ou de gaz.

9. Roue (10a, 10b) selon l'une des revendications précédentes,
**caractérisée en ce que**
tous les profilés (1010) prévus sur une roue (10a, 10b) pour former une cavité flottante (1011) entourant la roue (10a, 10b) sont reliés entre eux de manière étanche à l'eau sur le corps flottant (101) au moyen d'au moins un matériau (1012) étanche à l'eau et flexible et/ou élastique.

10. Roue (10a, 10b) selon l'une des revendications précédentes,
**caractérisée en ce que**
le matériau (1012) est relié à la roue (10a, 10b) sur au moins une autre zone de la roue (10a, 10b) pour former une cavité flottante périphérique (1011) sur le corps flottant (101).

11. Roue (10a, 10b) selon l'une des revendications précédentes,
**caractérisée en ce que**
le volume des corps flottants (101) ou des cavités flottantes (1011) sur la roue (10a, 10b) est réglable de manière variable.

12. Roue (10a, 10b) selon l'une des revendications précédentes,
**caractérisée en ce que**
est prévue une commande au moyen de laquelle le processus de pivotement peut être initié et/ou le volume des corps flottants (101) ou des cavités flottantes (1011) sur la roue (10a, 10b) peut être réglé respectivement de manière variable.

13. Roue (10a, 10b) selon l'une des revendications précédentes,
**caractérisée en ce que**
les profilés (1010) sont conçus comme des pales, les profilés (1010) se contractant/repliant pour générer une force de propulsion et s'ouvrant en charnière après avoir traversé la fourche du vélo.

14. Roue (10a, 10b) selon l'une quelconque des revendications précédentes,
**caractérisée en ce que**
les profilés (1010) sont activés pour s'ouvrir et se fermer à partir d'un mécanisme à l'intérieur de la jante (100) qui est déclenché par un câble, un système hydraulique ou autre, au moyen d'au moins un interrupteur OUVERT 104b.
